# EUROPÄISCHE PATENTSCHRIFT

(11) **EP 2 417 001 B1**
(45) Veröffentlichungstag und Bekanntmachung des Hinweises auf die Patenterteilung: **14.01.2015**
(21) Anmeldenummer: 10714219.2
(22) Anmeldetag: 23.03.2010
(51) Int. Cl.: B62D 5/00, B62D 1/10

(54) **LENKRAD FÜR EIN KRAFTFAHRZEUG MIT ÜBERLAGERUNGSLENKUNG**
STEERING WHEEL FOR A MOTOR VEHICLE HAVING SUPERIMPOSED STEERING
VOLANT DE DIRECTION POUR VÉHICULE AUTOMOBILE À DIRECTION À SUPERPOSITION

(30) Priorität: 09.04.2009 DE 102009017714
(43) Veröffentlichungstag der Anmeldung: 15.02.2012
(73) Patentinhaber: Takata AG, 63743 Aschaffenburg (DE)
(72) Erfinder: MARKFORT, Dieter, 13088 Berlin (DE); WERDIN, Philipp, 13467 Berlin (DE)
(74) Vertreter: Baumgärtel, Gunnar
(86) Internationale Anmeldenummer: PCT/EP2010/053775
(87) Internationale Veröffentlichungsnummer: WO 2010/115707

(56) Entgegenhaltungen:
- WO-A1-2007/009420
- WO-A1-2008/125944
- DE-A1-102005 058 176
- DE-A1-102006 055 774
- JP-A- 6 336 163
- JP-A- 2004 182 061

## Beschreibung

Die Erfindung betrifft ein Lenkrad für ein Kraftfahrzeug nach dem Oberbegriff des Patentanspruchs 1, und ein Lenksystem nach dem Oberbegriff des Anspruchs 14.

Ein derartiges Lenkrad umfasst einen Lenkradkranz zur drehenden Betätigung des Lenkrades durch einen Fahrer sowie eine Lenkradnabe, über die das Lenkrad mit einer von dem Lenkrad separaten, drehbaren Lenkwelle eines Kraftfahrzeugs verbindbar ist, so dass eine Drehbewegung des Lenkradkranzes in eine entsprechende Drehbewegung der Lenkwelle umgesetzt wird. Lenkradkranz und Lenkradnabe sind dabei z.B. über Speichen miteinander verbunden.

Weiterhin ist am Lenkrad ein Überlagerungsantrieb zur Betätigung einer Überlagerungslenkung vorgesehen, mit der ein bei fahrerseitiger Betätigung des Lenkradkranzes erzeugbarer Lenkwinkel durch einen von der Überlagerungslenkung erzeugten Überlagerungswinkel überlagerbar ist, so dass sich eine jeweilige Drehbewegung der Lenkwelle - bezogen auf den mit dem Lenkrad verbundenen Zustand der Lenkwelle - aus einem durch fahrerseitige Betätigung des Lenkradkranzes erzeugten Lenkwinkel und einem durch Betätigung der Überlagerungslenkung erzeugten Überlagerungswinkel zusammensetzt, wobei letzterer im Fall einer Deaktivierung der Überlagerungslenkung keinen Beitrag liefert.

Ein derartiges Lenkrad ist aus der WO 2007/009420 A1 bekannt. Hierbei umfasst der Überlagerungsantrieb zwei in jeweils eine Speiche des Lenkrades integrierte Antriebsmotoren (Elektromotoren), die über je ein Schnecke auf ein zentrales Getriebeelement des Überlagerungsantriebs in Form eines abtriebsseitigen Schneckenrades einwirken können. Über dieses abtriebsseitige Getriebeelement steht wiederum der Überlagerungsantrieb so mit einer zugeordneten Lenkwelle eines Kraftfahrzeugs in Verbindung, dass ein vom Antriebsmotor des Überlagerungsantriebs erzeugtes Moment in die Lenkwelle einleitbar ist, um diese um einen bestimmten Überlagerungswinkel zu drehen - zusätzlich zu einem durch fahrerseitige Betätigung des Lenkradkranzes erzeugten Lenkwinkel.

Eine weitere Variante eines Überlagerungsantriebs für eine Überlagerungslenkung mit einem Antriebsmotor und einem dem Antriebsmotor nachgeordneten Getriebe ist aus der DE 101 60 313 A1 bekannt, wobei dieser Überlagerungsantrieb außerhalb des Lenkrades zwischen einem mit dem Lenkrad verbundenen eingangsseitigen Lenkwellenabschnitt und einem mit dem Lenkgetriebe eines Kraftfahrzeugs verbundenen ausgangsseitigen Lenkwellenabschnitt angeordnet ist. Hierdurch wird im Bereich der die Lenkwelle umgebenden Lenksäule zusätzlicher Bauraum für die Aufnahme der Überlagerungslenkung benötigt, was eine entsprechende Ausgestaltung der Lenksäule erfordert.

Der Erfindung liegt das Problem zugrunde, ein Lenkrad für ein Kraftfahrzeug mit einer Überlagerungslenkung zu schaffen, die keinen zusätzlichen Bauraum in der Lenksäule erfordert und die bei Deaktivierung zuverlässig arretierbar ist:

Dieses Problem wird erfindungsgemäß durch die Schaffung eines Lenkrades bzw. eines Lenksystems mit den Merkmalen der Patentansprüche 1 bzw. 14 gelöst.

Danach ist am Lenkrad eine von den zur Erzeugung des Überlagerungswinkels dienenden Komponenten der Überlagerungslenkung separate, mechanische Arretierungseinrichtung vorgesehen, mit der der Überlagerungsantrieb durch mechanische Einwirkung arretierbar ist.

Bei der Arretierungseinrichtung handelt es sich anspruchsgemäß um eine Vorrichtung, die separat von den zur Erzeugung des Übertragungswinkels dienenden Komponenten des Überlagerungsantriebs ist; das heißt, eine solche Arretierungseinrichtung kann nicht durch eine selbsthemmende Auslegung des Überlagerungsantriebs gebildet werden. Vielmehr ist die Arretierungseinrichtung unabhängig davon anwendbar, ob es sich bei dem Überlagerungsantrieb um einen selbsthemmenden oder einen nicht selbsthemmenden Antrieb handelt.

Die Arretierungseinrichtung ist dabei derart (beispielsweise elektrisch, etwa mittels eines Elektromagneten, eines Antriebsmotors oder eines Relais, oder auch pneumatisch) aktivierbar, dass bei einer Aktivierung der Arretierungseinrichtung die mechanische Einwirkung der Arretierungseinrichtung auf den Überlagerungsantrieb ausgelöst und dieser hierdurch arretiert wird. Eine Aktivierung der Arretierungseinrichtung ruft in diesem Fall also (insbesondere als direkte Folge) eine Arretierung des Überlagerungsantriebs hervor.

Die Arretierungseinrichtung kann gezielt so ausgebildet werden, dass sie eine optimale Haltewirkung bei einer Arretierung des Überlagerungsantriebs gewährleistet. Andererseits kann der Überlagerungsantrieb im Hinblick auf seine eigentliche Antriebsfunktion, insbesondere auch seinen Wirkungsgrad, hin optimiert werden.

Der Überlagerungsantrieb wird durch einen Aktuator, z.B. in Form eines Antriebsmotors, und ein dem Aktuator nachgeordnetes Überlagerungsgetriebe gebildet, über welches ein vom Aktuator erzeugtes Antriebsmoment in einen definierten Lenkwinkel einer zugeordneten Lenkwelle umgesetzt wird.

Zur mechanischen, form- und/oder kraftschlüssigen Arretierung bzw. Verriegelung des Überlagerungsantriebs kann die Arretierungseinrichtung mindestens ein Halteelement umfassen, das in einer Halteposition form- und/oder kraftschlüssig mit einer Komponente des Überlagerungsantriebs in Eingriff bringbar ist, um diese zu sperren und hierdurch den Überlagerungsantrieb zu arretieren bzw. zu verriegeln. Das Halteelement kann hierzu beispielsweise zwischen einer Freigabeposition, in der es den Überlagerungsantrieb nicht arretiert bzw. verriegelt, und jener Halteposition hin und her bewegbar sein.

Das Halteelement kann über Fixiermittel, zum Beispiel in Form mindestens eines Klemmelements oder in Form von Formschlussmitteln, zum (klemmenden bzw. formschlüssigen) Fixieren bzw. Sperren einer Komponente des Überlagerungsantriebs verfügen.

Das mindestens eine Halteelement kann grundsätzlich an beliebigen Komponenten des Überlagerungsantriebs angreifen, um eine Relativbewegung zwischen der Eingangsseite und der Ausgangsseite des Überlagerungsantriebs zu verhindern und letzteren hierdurch zu arretieren bzw. zu verriegeln. Im verriegelten Zustand des Überlagerungsantriebs kann ein Lenkwinkel (also eine Drehbewegung der Lenkwelle) allein durch ein Drehmoment erzeugt werden, welches durch die fahrerseitige Betätigung des Lenkradkranzes eingeleitet wird. Insbesondere kann das Halteelement an einer Antriebswelle des Aktuators (Motorwelle) des Überlagerungsantriebs angreifen, und zwar vorteilhaft an einem freien Ende dieser Welle, die zu diesem Zweck mit einem Arretierungsabschnitt aus dem Gehäuse des Aktuators (Motorgehäuse) hinausragt. Dieser Arretierungsabschnitt der Antriebswelle ist bevorzugt demjenigen Wellenabschnitt abgewandt, über den die Antriebswelle auf ein nachgeordnetes Überlagerungsgetriebe einwirkt. Alternativ kann das Halteelement aber z.B. auch an einem mit der Antriebswelle verbundenen Element, wie zum Beispiel einer Antriebsschnecke, angreifen, welches einen Bestandteil des Überlagerungsgetriebes bildet.

Um das Halteelement zwischen einer Freigabeposition und einer Halteposition hin und her zu bewegen und (dadurch die Arretierungseinrichtung zu deaktivieren und aktivieren), können als Bewegungserzeugungsvorrichtung beispielsweise ein Elektromagnet und/oder Federmittel vorgesehen sein, insbesondere auch eine Kombination zweier solcher Elemente. So kann bei Aktivierung (Bestromung) des Elektromagneten auf das Halteelement, welches hierzu aus einem magnetischen Material besteht bzw. mit einer magnetischen Komponente versehen ist, eine magnetische Kraft ausgeübt werden, die das Halteelement unter Verspannung der Federmittel in einer der besagten Positionen, also der Freigabeposition oder der Halteposition, hält. Bei Nichtbestromung des Elektromagneten kann dann das Halteelement unter der Wirkung der Federelemente in die jeweils andere der beiden Positionen überführt werden.

Insbesondere kann vorgesehen sein, dass das Halteelement im aktivierten (bestromten) Zustand des Elektromagneten - entgegen der Wirkung der Federmittel - in der Freigabeposition gehalten werden und bei Deaktivierung (Nichtbestromung) des Elektromagneten unter Entlastung der Federmittel in die Halteposition überführt werden.

Weiter kann zur Bewegung des Halteelementes zwischen einer Freigabeposition und einer Halteposition ein Aktuator in Form eines Antriebsmotors (insbesondere Linearmotors) oder eines Relais vorgesehen sein, welcher bzw. welches das Halteelement wahlweise in seine Freigabeposition oder seine Halteposition überführt. Bevorzugt befindet sich dabei das Halteelement in seiner Freigabeposition, wenn der Aktuator der Arretierungseinrichtung bestromt wird; umgekehrt befindet sich bei dieser Ausführungsform das Halteelement vorteilhaft in seiner Halteposition, wenn der Aktuator nicht bestromt wird.

Wenn sich das Halteelement in seiner Freigabeposition befindet, sollte es so angeordnet sein, dass es nicht auf den Überlagerungsantrieb einwirkt, also insbesondere die Drehmomentübertragung zwischen Eingangsseite und Ausgangsseite des Überlagerungsantriebs nicht beeinflusst. So ist ein in seiner Halteposition mit der Antriebswelle eines Aktuators der Überlagerungslenkung in Eingriff stehendes Halteelement in seiner Freigabeposition vorteilhaft derart von der Antriebswelle beabstandet, dass deren Drehbewegung nicht beeinflusst wird.

Um von einem laufenden Betrieb des Überlagerungsantriebs in dessen arretierten bzw. verriegelten Zustand überzugehen, kann vor bzw. bei Aktivierung der Arretierungseinrichtung die Energieversorgung (Bestromung) des Aktuators des Überlagerungsantriebs unterbrochen und/oder der Aktuator (mindestens zwei Pole des Aktuators) elektrisch kurzgeschlossen werden. Im letztgenannten Fall wird der Aktuator bzw. Überlagerungsantrieb durch eine Kurzschlussbremse gebremst und durch die Arretierungseinrichtung zusätzlich mechanisch arretiert.

Dabei kann das Halteelement bzw. eine Komponente der dem Halteelement zugeordneten Bewegungserzeugungsvorrichtung dazu dienen, bei Aktivierung der Arretierungseinrichtung den Stromfluss zum Aktuator zu unterbrechen und/oder diesen kurzzuschließen. Hierfür kann das Halteelement auf elektrische Kontakte des Aktuators einwirken und/oder selbst über elektrische Kontakte verfügen, die dazu beitragen, dass bei einer Bewegung des Halteelementes, um dieses aus seiner Freigabeposition in seine Halteposition zu überführen, der Stromfluss zum Aktuator unterbrochen und/oder der Aktuator kurzgeschlossen wird. Insbesondere kann somit eine Zwangskopplung zwischen der Arretierungseinrichtung und den Mitteln zur Deaktivierung des Aktuators durch Unterbrechung der Energieversorgung bzw. des Stromflusses vorliegen.

Konkret kann das Halteelement bzw. eine andere Komponente der zugehörigen Bewegungserzeugungsvorrichtung dazu dienen, in der Freigabeposition des Halteelementes einen elektrischen Kontakt zwischen dem Aktuator und einer zugeordneten Energieversorgung/Steuerelektronik eines Kraftfahrzeugs herzustellen und bei Überführung des Halteelementes in die Freigabeposition jene elektrische Kontaktierung zu unterbrechen und außerdem einen Kurzschluss herzustellen.

Andererseits können die Mittel zur Deaktivierung des Überlagerungsantriebs bzw. des zugehörigen Aktuators (Unterbrechungsmechanismus) auch unabhängig von der Arretierungseinrichtung wirken. Die Deaktivierung des Überlagerungsantriebs bzw. genauer des Aktuators kann in diesem Fall zum Beispiel durch eine Steuereinheit erfolgen, über die der Überlagerungsantrieb/Aktuator mit elektrischem Strom und/oder Steuersignalen versorgt wird.

Das Halteelement selbst kann schwenkbar und/oder verschiebbar ausgebildet sein, so dass es zwischen einer Freigabeposition und einer Halteposition verschwenkt bzw. verschoben werden kann.

Nach einer Ausführungsform kann das Halteelement durch einen zweiarmigen (abgewinkelten) Hebel gebildet werden, dessen einer Hebelarm der Bewegungserzeugungsvorrichtung zugeordnet ist, um das Halteelement zwischen einer Freigabeposition und einer Halteposition hin und her zu bewegen, und dessen anderer Hebelarm zum sperrenden Eingriff in eine Komponente des Überlagerungsantriebs vorgesehen ist, wenn sich das Halteelement in der Halteposition befindet.

Nach einer anderen Ausführungsform kann es sich bei dem Halteelement um einen Verriegelungsbolzen handeln, der durch geeignete Betätigungsmittel, zum Beispiel durch einen Aktuator der Arretierungseinrichtung, mit einem nachgeordneten Element, zum Beispiel einer an einer Komponente des Überlagerungsantriebes vorgesehenen Verriegelungsscheibe, form- und/oder kraftschlüssig in Eingriff bringbar ist, um diesen zu verriegeln.

Nach einer Weiterbildung der Erfindung sind zumindest Teile des Überlagerungsantriebs, wie zum Beispiel das Überlagerungsgetriebe, und/oder eine dem Überlagerungsantrieb zugeordnete Steuereinheit, hinter der Lenkradnabe angeordnet. Dies bedeutet, dass die besagten Baugruppen von der Lenkradnabe überdeckt sind, wenn das Lenkrad bestimmungsgemäß in ein Kraftfahrzeug eingebaut ist und von dem bestimmungsgemäßen Sitzplatz des Fahrzeugführers (Fahrers), welcher das Lenkrad zu betätigen hat, her betrachtet wird.

Weiterhin kann vorteilhaft vorgesehen sein, dass der Aktuator des Überlagerungsantriebs mit seiner Antriebswelle (Motorwelle) bzw. der hierdurch definierten Antriebsachse derart räumlich ausgerichtet ist, dass er sich schräg geneigt (unter einem Winkel von weniger als 90°) zur Lenkwelle erstreckt, insbesondere mit einer Neigung, die der Neigung der Lenkradspeichen bezüglich der Lenkwelle entspricht. Hierdurch kann der Aktuator in optisch ansprechender Weise mit einer Lenkradspeiche zu einer Baueinheit zusammengefasst werden.

Gemäß Anspruch 14 kann eine Kombination aus einer Kurzschlussbremse und einer mechanischen Arretierungseinrichtung für einen Überlagerungsantrieb einer Überlagerungslenkung auch außerhalb eines Lenkrades vorteilhaft in einem Lenksystem eingesetzt werden, z. B. zwischen einem Lenkrad und einer nachgeordneten Lenkwelle oder zwischen zwei Wellenabschnitten der Lenkwelle.

Weitere Einzelheiten und Vorteile der Erfindung werden bei der nachfolgenden Beschreibung von Ausführungsbeispielen anhand der Figuren deutlich werden.

Es zeigen:
- Fig. 1: eine Seitenansicht eines Aktuators einer Überlagerungslenkung für ein Kraftfahrzeuglenkrad mit einer Arretierungseinrichtung zum Arretieren des Aktuators;
- Fig. 2A: eine erste perspektivische Darstellung eines Ausschnitts des Aktuators aus Figur 1 bei deaktivierter Arretierungseinrichtung, so dass der Aktuator eine Überlagerungslenkung antreiben kann;
- Fig. 2B: eine zweite perspektivische Darstellung der Anordnung gemäß Figur 2A;
- Fig. 2C: eine dritte perspektivische Darstellung der Anordnung gemäß Figur 2A;
- Fig. 3A: eine erste perspektivische Darstellung eines Ausschnitts des Aktuators aus Figur 1 im aktivierten Zustand der Arretierungseinrichtung, so dass der Aktuator arretiert ist;
- Fig. 3B: eine zweite perspektivische Darstellung gemäß Fig. 3A;
- Fig. 3C: eine dritte perspektivische Darstellung gemäß Fig. 3A;
- Fig. 4: ein Lenkrad für ein Kraftfahrzeug mit einer Überlagerungslenkung, umfassend einen Aktuator sowie ein dem Aktuator nachgeordnetes Überlagerungsgetriebe und eine dem Aktuator zugeordnete Arretierungseinrichtung, jeweils angeordnet am Lenkrad;
- Fig. 5: eine Abwandlung des Ausführungsbeispieles aus den Figuren 1 bis 4, dargestellt anhand einer Schnittansicht eines Lenkrades.

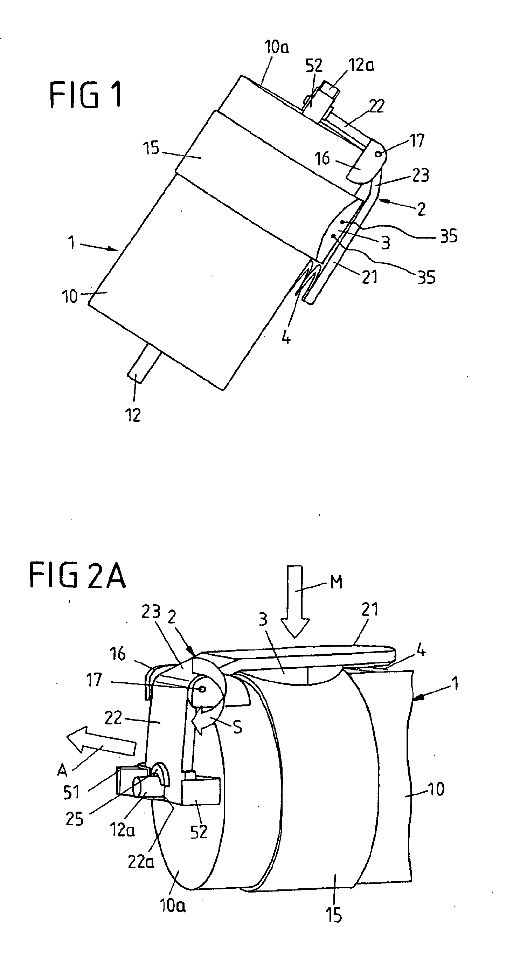

Figur 1 zeigt eine Seitenansicht eines Aktuators 1 einer Überlagerungslenkung, hier ausgebildet als ein Antriebsmotor (Elektromotor), zum Antreiben eines dem Aktuator 1 nachgeordneten Überlagerungsgetriebes, mit dem einem durch Betätigung eines Lenkrades erzeugten Lenkwinkel ein zusätzlicher Winkel (Überlagerungswinkel) überlagerbar ist.

Der Aktuator 1 umfasst ein Gehäuse 10 (Motorgehäuse), aus dem in bekannter Weise eine Antriebswelle 12 (Aktuator- bzw. Motorwelle) hinausragt, die im Betrieb des Aktuators 1 gedreht wird und die mit einem nachgeordneten Überlagerungsgetriebe zusammenwirkt, um ein vom Aktuator 1 erzeugtes Antriebsmoment auf das Überlagerungsgetriebe zu übertragen.

Vorliegend ragt die Antriebswelle 12 nicht nur in üblicher Weise mit einem Wellenabschnitt an einem freien Ende axial aus dem (rohrförmigen) Gehäuse 10 des Aktuators 1 heraus, um Drehmoment übertragend mit einem nachgeordneten Überlagerungsgetriebe koppelbar zu sein, sondern die Antriebswelle 12 ragt außerdem auch mit ihrem anderen, zweiten freien Endabschnitt 12a an einer axialen Stirnseite 10a des Gehäuses 10 aus diesem heraus. Dieser zweite Endabschnitt 12a der Antriebswelle 12 wird nachfolgend als Arretierungsabschnitt 12a der Antriebswelle 12 bezeichnet, da der Aktuator 1, wie nachfolgend im Einzelnen beschrieben werden wird, durch mechanische Einwirkung einer Arretierungseinrichtung auf jenen Arretierungsabschnitt 12a der Antriebswelle 12 arretierbar bzw. verriegelbar ist.

Die Arretierungseinrichtung 2, 3, 4 weist im Ausführungsbeispiel ein Halteelement 2 in Form eines Arretierungshebels mit zwei (rechtwinklig) zueinander abgewinkelten Hebelarmen 21, 22 auf, die über einen Verbindungsabschnitt 23 miteinander verbunden sind, sowie weiterhin einen Elektromagneten 3 mit elektrischen Anschlüssen 35 und Federmittel 4 als Bewegungserzeugungsvorrichtung zur Betätigung des Halteelementes 2.

Das Halteelement 2 ist dabei um eine Schwenkachse 17 verschwenkbar gelagert, die mittels Halterungen 16 am Gehäuse 10 des Aktuators 1 angebracht ist. Der Elektromagnet 3 und die Federmittel 4 sind ebenfalls am Gehäuse 10 angeordnet, und zwar der Elektromagnet 3 an einem das Gehäuse 10 umgreifenden Haltering 15 und die Federmittel 4 an einem Abschnitt der Gehäusewandung, so dass sie zwischen dem ersten Hebelarm 21 des Halteelementes 2 und dem Gehäuse 10 aufgenommen sind.

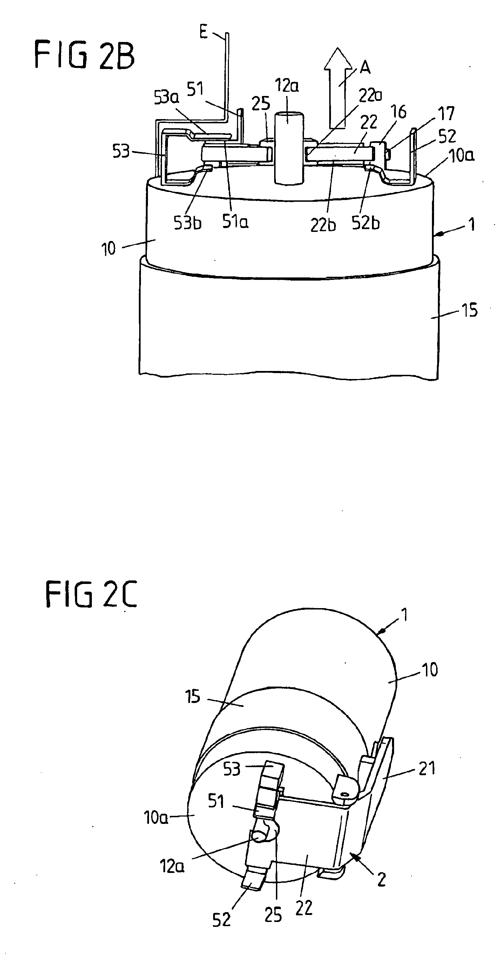

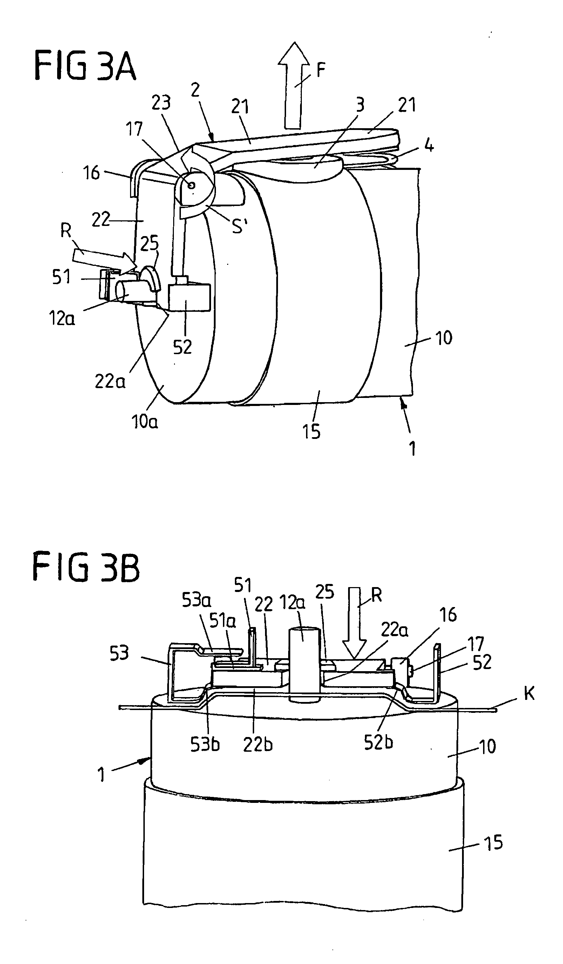

Der Aufbau der Arretierungseinrichtung 2, 3, 4 sowie deren Funktion wird nachfolgend in größerem Detail anhand einer Zusammenschau der Figur 1 mit den Figuren 2A bis 2C bzw. mit den Figuren 3A bis 3C erläutert werden, wobei die Figuren 2A bis 2C den nichtarretierten und die Figuren 3A bis 3C den mittels der Arretierungseinrichtung 2, 3, 4 arretierten Aktuator 1 zeigen.

Gemäß einer Zusammenschau der Figur 1 mit den Figuren 2A bis 2C dient der erste Hebelarm des als Arretierungshebel ausgebildeten Halteelementes 2 als ein Betätigungsabschnitt 21, über den eine Schwenkbewegung des Halteelementes 2 um dessen Schwenkachse 17 auslösbar ist, und zwar durch Zusammenwirken jenes Betätigungsabschnittes 21 mit dem Elektromagneten 3 und den Federmitteln 4.

In dem in den Figuren 2A bis 2C gezeigten Zustand des Aktuators 1 ist der Elektromagnet 3 aktiv, d. h. bestromt, so dass er auf den Betätigungsabschnitt 21 des Halteelementes 2 eine magnetische Haltekraft M ausübt, welche die Tendenz hat, den Betätigungsabschnitt 21 des Halteelementes 2 an den Elektromagneten 3 heranzuführen, wie insbesondere in Figur 2A erkennbar ist. Der Betätigungsabschnitt 21 des Halteelementes 2 besteht hierzu zumindest bereichsweise aus einem magnetischen Material.

Der Elektromagnet 3 und der Betätigungsabschnitt 21 des Halteelementes 2 sind so ausgelegt, dass bei Bestromung des Elektromagneten 3 die auf den Betätigungsabschnitt 21 wirkende magnetische Haltekraft bzw. das hiermit verbundene Haltemoment (bezogen auf die Schwenkachse 17 des Halteelementes 2) größer ist als die Rückstellkraft bzw. das Rückstellmoment, welches von den zwischen dem Gehäuse 10 des Aktuators 1 und dem Betätigungsabschnitt 21 des Halteelementes 2 angeordneten federmitteln 4 entgegen der Wirkung des Elektromagneten 3 ausgeübt wird. Die Federmittel 4 sind hierbei im Ausführungsbeispiel als eine Druckfeder ausgebildet und haben die Tendenz, unter der Wirkung ihrer Vorspannung, den Betätigungsabschnitt 21 des Halteelementes 2 von dem Elektromagneten 3 weg zu bewegen.

Im Ergebnis sind bei bestromtem Elektromagneten 3 die auf den Betätigungsabschnitt 21 des Halteelementes 2 wirkenden magnetischen Haltekräfte M also hinreichend groß, damit das Halteelement 2 mit seinem Betätigungsabschnitt 21 gegen jenen Elektromagneten 3 gedrückt wird. Dies entspricht einer derartigen Schwenkrichtung S des Halteelementes 2 um die zugeordnete Schwenkachse 17, dass der mit dem Arretierungsabschnitt 12a der Antriebswelle 12 zusammenwirkende Halteabschnitt 22 entlang einer Richtung A mit jenem Arretierungsabschnitt 12a außer Eingriff gebracht ist. D. h., der Halteabschnitt 22 des Halteelementes 2 wirkt in diesem Zustand nicht auf den Arretierungsabschnitt 12a der Antriebswelle 12 ein, so dass diese frei drehbar ist.

Wie insbesondere anhand Figur 2B deutlich wird, sind zur Bestromung des Aktuators 1 zwei elektrische Anschlüsse 51, 52 vorgesehen, die im Bereich des Halteelementes 2, im Ausführungsbeispiel genauer im Bereich des Halteabschnittes 22 des Halteelementes 2 angeordnet sind, und damit an derjenigen Stirnseite 10a des Gehäuses 10, vor dem sich der (einen den Arretierungsabschnitt 12a der Antriebswelle 12 umschließenden Umgriff 22a mit einem daran angeordneten Fixierelement 25 aufweisende) Halteabschnitt 22 des Halteelementes 2 erstreckt.

Während der zweite elektrische Anschluss 52 in unmittelbarem elektrischen Kontakt mit dem Aktuator 1 steht, ist der erste elektrische Anschluss 51 über ein Verbindungsleiterelement 53 mit dem Aktuator 1 elektrisch verbunden. Hierzu ist der erste elektrische Anschluss 51 mit einem (abgewinkelten) Anschlussabschnitt 51 a am Halteelement 2, nämlich an dessen Halteabschnitt 22 angeordnet, und steht über den Anschlussabschnitt 51a außerdem mit einem Kontaktierungsabschnitt 53a des Verbindungsleiterelementes 53 in elektrischer Verbindung, wenn das Halteelement 2 sowie dessen Halteabschnitt 22 in dem in den Figuren 2A bis 2C gezeigten Zustand (mit bestromten Elektromagneten 3) so ausgerichtet sind, dass der Halteabschnitt 22 nicht mit dem Arretierungsabschnitt 12a der Antriebswelle 12 in Eingriff ist. Hierdurch wird ein elektrischer Stromfluss entlang einer in Figur 2B schematisch angedeuteten Energieversorgungsbahn E zur Versorgung des Aktuators 1 ermöglicht.

Weiterhin weisen sowohl das dem ersten elektrischen Anschluss 51 zugeordnete Verbindungsleiterelement 53 als auch der zweite elektrische Anschluss 52 jeweils einen Kurzschlussabschnitt 52b zw. 53b auf, die an einer dem Motorgehäuse 10 bzw. dessen halteelementseitiger Stirnseite 10a zugewandten elektrisch leitenden Oberfläche 22b des Halteelementes 2 gegenüberliegen; und zwar in dem in den Figuren 2A bis 2C gezeigten Zustand mit einem Abstand, so dass kein Kontakt zwischen jenen Kurzschlussabschnitten 52b, 53b und der gegenüberliegenden elektrischen Oberfläche 22b des Halteelementes 2 bzw. Halteabschnittes 22 besteht.

Ausgehend von dem in den Figuren 2A bis 2C gezeigten Zustand der Arretierungseinrichtung 2, 3, 4, mit aktivem (bestromten) Elektromagneten 3 und dementsprechend deaktivierter Arretierungsvorrichtung 2, 3, 4 lässt sich der Aktuator 1 zur Betätigung einer Überlagerungslenkung für ein Kraftfahrzeuglenkrad wie folgt betreiben:

Eine dem Aktuator 1 - seitens einer Kraftfahrzeugelektronik bzw. einer kraftfahrzeugseitigen Energieversorgung - über die elektrischen Anschlüsse 51, 52 zugeführte elektrische Energie (elektrischer Strom) ruft nach dem elektromotorischen Prinzip eine Drehung der Antriebswelle 12 des Aktuators 1 hervor, so dass hierüber ein Drehmoment auf ein dem Aktuator 1 nachgeordnetes Überlagerungsgetriebe übertragen werden kann. Alternativ kann die Antriebswelle 12 selbst Bestandteil des Überlagerungsgetriebes sein. Das dem Arretierabschnitte 12a gegenüber liegende Ende der Antriebswelle ist dann z.B. mit einer Verzahnung versehen, vorzugsweise als Schneckenwelle ausgeführt. Die Drehbewegung der Antriebswelle 12 wird dabei durch die Arretierungseinrichtung 2, 3, 4 nicht beeinträchtigt, da das Halteelement 2, genauer dessen Halteabschnitt 22, außer Eingriff mit dem Arretierungsabschnitt 12a der Antriebswelle 12 steht.

Dabei kann abweichend von dem dargestellten Ausführungsbeispiel auch vorgesehen sein, das Zusammenwirken von Halteelement 2, Elektromagnet 3 und Federmitteln 4 so abzuwandeln, dass der in den Figuren 2A bis 2C gezeigte Zustand bei nichtbestromten Elektromagneten eingenommen wird. In diesem Fall müssten die Federmittel 4, beispielsweise in Form einer Zugfeder, so ausgebildet und angeordnet sein, dass sie die Tendenz haben, das Halteelement 2 in einem Zustand zu halten, in dem dieses nicht auf den Arretierungsabschnitt 12a der Antriebswelle 12 einwirkt. Der Elektromagnet 3 müsste sodann wiederum derart mit dem Halteelement 2 bzw. dessen Betätigungsabschnitt 21 zusammenwirken, dass er bei Bestromung das Halteelement 2 in einen Zustand überführt, in dem es den Aktuator 1 arretiert.

Vorliegend wird jedoch gemäß dem dargestellten Ausführungsbeispiel weiterhin davon ausgegangen, dass sich die Arretierungseinrichtung 2, 3, 4 bei bestromten Elektromagneten 3 im deaktivierten Zustand befindet.

Um nun den Aktuator 1 zu stoppen und zu arretieren, ist es gemäß dem vorliegenden Ausführungsbeispiel lediglich erforderlich, den Stromfluss zum Elektromagneten 3 zu unterbrechen (bzw. bei der vorstehend beschriebenen Abwandlung des dargestellten Ausführungsbeispiels einen Stromfluss zum Elektromagneten 3 herzustellen). Hierdurch übt der Elektromagnet 3 im dargestellten Ausführungsbeispiel keine magnetischen Haltekräfte mehr auf das Halteelement 2 bzw. dessen Betätigungsabschnitt 21 aus, so dass das Halteelement 2 unter der Wirkung der zwischen dem Gehäuse 10 des Aktuators 1 und dem Halteelement 2, genauer dessen Betätigungsabschnitt 21, angeordneten Federmitteln 4 entlang einer durch die Federkraft F bzw. das Federmoment vorgegebenen Richtung von dem Elektromagneten 3 abgehoben wird, wie in Figur 3A dargestellt. Hierdurch führt die von den Federmitteln 4 ausgeübte Federkraft F bzw. das hiermit verbundene Federmoment zu einer Bewegung (Schwenkbewegung S') des Halteelementes 2 (entgegen der zuvor durch die magnetischen Haltekräfte M vorgegebenen Schwenkrichtung S), durch die der Halteabschnitt 22 des Halteelementes 2 entlang einer Rückstellrichtung R an den Arretierungsabschnitt 12a der Antriebswelle 12 herangeführt wird, um einen Eingriff herzustellen, vergleiche Figur 3A. Dies entspricht einem Übergang des Halteelementes 2 von einer Freigabeposition (Figuren 2A bis 2C), in der der Aktuator 1 nicht arretiert ist, in eine Halteposition (Figuren 3A bis 3C), in der der Aktuator 1 mittels des Halteelementes 2 arretiert ist.

Noch bevor aber der mechanische Eingriff (vollständig) hergestellt ist, wird zunächst als Folge der beschriebenen (Schwenk-)Bewegung des Halteelementes 2 die Stromversorgung zum Aktuator 1 unterbrochen, vergleiche Figur 3B, da der am Halteelement 2, genauer an dessen Halteabschnitt 22, angeordnete erste elektrische Anschluss 51 mit dem zugeordneten Verbindungsleiterelement 53, welches den elektrischen Kontakt zwischen dem Anschluss 51 und dem Aktuator 1 herstellt, außer Anlage gerät, so dass die elektrische Verbindung zwischen dem ersten elektrischen Anschluss 51 und dem Aktuator 1 unterbrochen ist, wie anhand Figur 3B erkennbar. Konkret wird durch die beschriebene (Schwenk-) Bewegung des Halteelementes 2 der Anschlussabschnitt 51a des ersten elektrischen Anschlusses 51 von dem zugeordneten Kontaktierungsabschnitt 53A des Verbindungsleiterelementes 53 abgehoben. So wird unmittelbar nach Unterbrechung der Stromversorgung zum Elektromagneten 3 und einer hierdurch beginnenden (Schwenk-)Bewegung S' des Halteelementes 2 die Stromversorgung zum Aktuator 1 unterbrochen.

Beim Bewegen bzw. genauer Verschwenken des Halteelementes 2 nach Unterbrechung der Stromversorgung zum Elektromagneten 3 und der hiermit verbundenen Rückstellbewegung R des Halteabschnittes 22 des Halteelementes 2 gerät außerdem die elektrisch leitfähige Oberfläche 22b des Halteelementes 2 in elektrischen Kontakt mit den Kurzschlussabschnitten 52b, 53b des zweiten elektrischen Anschlusses 52 und des dem ersten elektrischen Anschluss 51 zugeordneten Verbindungsleiterelementes 53, so dass die beiden Pole des Motors entlang einer schematisch angedeuteten Kurzschlussbahn K kurzgeschlossen werden, wie ebenfalls anhand Figur 3B erkennbar. (Hierzu kann das Halteelement 2 aus einem elektrisch leitfähigen Material bestehen oder an der besagten Oberfläche 22b mit einer elektrischen Beschichtung oder sonstigen elektrisch leitenden Fläche versehen sein.)

Im Ergebnis wird eine Kurzschlussbremse des Aktuators 1 aktiviert, die in bekannter Weise die Drehung der Antriebswelle 12 bremst, vergleiche EP 1 382 792 A1.

Somit führt also die (Schwenk-)Bewegung S' des Halteelementes 2 (als Folge einer Unterbrechung der Stromversorgung zum Elektromagneten 3) aus der in den Figuren 2a bis 2c gezeigten Freigabeposition (mit deaktivierter Arretierungseinrichtung) heraus in eine Halteposition nicht nur zu einer Unterbrechung der Stromversorgung zum Aktuator 1 sondern auch zu einer Kurzschlussbremsung des Aktuators 1 bzw. genauer von dessen Antriebswelle 12.

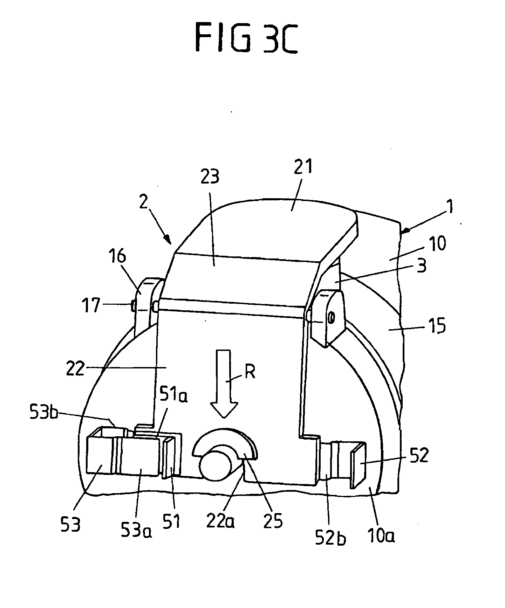

Wie insbesondere die Figuren 3A und 3C zeigen, führt die (Schwenk-)Bewegung S' des Halteelementes 2 weiterhin dazu, dass das Halteelement 2 bzw. dessen Halteabschnitt 22 durch eine Rückstellbewegung R mit dem Arretierungsabschnitt 12a der Antriebswelle 12 (form- und/oder kraftschlüssig) in Eingriff tritt, indem der den Arretierungsabschnitt 12a der Antriebswelle 12 (im Wesentlichen U-förmig) umgebende Umgriff 22a des Halteabschnittes 22 zusammen mit dem hieran vorgesehenen Fixierelement 25 klemmend (also im Wesentlichen kraft-/reibschlüssig) auf den Arretierungsabschnitt 12a einwirkt. Das Fixierelement 25 umgreift dabei den Arretierungsabschnitt 12a der Antriebswelle 12 bogenförmig (im Ausführungsbeispiel über einen Winkel von etwas weniger als 180°), so dass über die Bogenlänge ein klemmendes Einwirken des Fixierelementes 25 auf den Arretierungsabschnitt 12a der Antriebswelle 12 erreicht wird.

Die formschlüssige Verriegelungskomponente (aufgrund der bogenförmigen Ausgestaltung des Fixierelementes 25) spielt vorliegend, verglichen mit der kraft- bzw. reibschlüssigen Komponente, nur eine deutlich untergeordnete Rolle. Für einen formschlüssigen Eingriff des Halteelementes 2 bzw. Halteabschnittes 22 in den Arretierungsabschnitt 12a der Antriebswelle 12 könnte beispielsweise der Arretierungsabschnitt 12a mit Vertiefungen vorgesehen sein, in die halteabschnittseitige Vorsprünge eingreifen können.

Insgesamt wird durch den mechanischen Eingriff der Arretierungseinrichtung 2, 3, 4, genauer des Halteelementes 2 bzw. Halteabschnittes 22 der Arretierungseinrichtung, in einen Arretierungsabschnitt 12a des Aktuators 1 erreicht, dass der Aktuator 1 bzw. dessen Antriebswelle 12 (in statischer Lage) zuverlässig arretiert werden kann. Diese mechanische Arretierung wird solange aufrechterhalten, bis der Elektromagnet 3 wieder bestromt wird, so dass sich das Halteelement 2 unter der Wirkung der entsprechenden magnetischen Haltekräfte M wieder in die in den Figuren 2A bis 2C gezeigte Ausgangslage (Freigabeposition) bewegt, in der die Arretierungsvorrichtung 2, 3, 4 deaktiviert ist. Wie bereits oben erläutert, kann dabei eine Rückkehr des Halteelementes 2 in die Freigabeposition, in der die Arretierungseinrichtung 2, 3, 4 deaktiviert ist, grundsätzlich auch in anderer Weise als durch Bestromung eines Elektromagneten ausgelöst werden. Bei Rückkehr des Halteelementes 2 in die Freigabeposition wird auch der Kurzschluss an den elektrischen Anschlüssen 51, 52 (Polen) des Aktuators 1 aufgehoben sowie die elektrische Verbindung zwischen dem ersten elektrischen Anschluss 51 und dem zugehörigen Verbindungsleiterelement 53 wieder hergestellt, was eine Voraussetzung für den (erneuten) elektrischen Betrieb des Aktuators 1 ist.

Dadurch, dass das Halteelement 2 - über seinen Halteabschnitt 22 und das dortige Fixierelement 25 - bei einer (Schwenk-)Bewegung S' aus der in den Figuren 2A bis 2C gezeigten Freigabeposition heraus, in der die Arretierungsvorrichtung 2, 3, 4 deaktiviert ist, in seine Halteposition nicht unmittelbar in den sich noch mit voller Geschwindigkeit drehend bewegenden (drehenden) Arretierungsabschnitt 12a (der Antriebswelle 12) einfällt, sondern vielmehr am Aktuator 1 eine Kurzschlussbremsung vorgenommen wird, welche den besagten Arretierungsabschnitt 12a unmittelbar abbremst, wirken während des Eingriffs des Halteelementes 2 in jenen Arretierungsabschnitt 12a entsprechend kleinere Kräfte bzw. Momente. Dies ermöglicht wiederum einen entsprechend geringeren Aufwand und Materialbedarf beim Halteelement 2 und insbesondere dessen Fixierelement 25.

Die Kombination aus einer Kurzschlussbremsung des Aktuators 1 eines Überlagerungsantriebes für eine Lenkeinrichtung eines Kraftfahrzeugs und einer mechanischen Fixierung des Aktuators 1 kann auch unabhängig von der Anordnung des Aktuators 1 zusammen mit den nachgeordneten Komponenten des Überlagerungsantriebs und der Arretierungseinrichtung in einem Kraftfahrzeuglenkrad verwirklicht werden. D. h., die Kombination aus einer Kurzschlussbremse und einer mechanischen Arretierungseinrichtung ist auch dann vorteilhaft einsetzbar, wenn der Überlagerungsantrieb beispielsweise zwischen einem Lenkrad und einer dem Lenkrad nachgeordneten Lenkwelle liegt, hierbei jedoch als ein vom Lenkrad separates Bauteil, oder zwischen zwei Wellenabschnitten einer Lenkwelle vorgesehen ist.

Weiterhin muss es sich bei dem Arretierungsabschnitt 12a, an dem die Arretierungseinrichtung 2, 3, 4 zur mechanischen Arretierung bzw. Verriegelung des Überlagerungsantriebs angreift, nicht zwingend um eine Komponente des Aktuators 1 und schon gar nicht zwingend um einen Abschnitt von dessen Antriebswelle 12 handeln. Vielmehr kann eine derartige Arretierungseinrichtung 2, 3, 4 auch an einem Arretierungsabschnitt eines dem Aktuator 1 bzw. der Antriebswelle 12 nachgeordneten Getriebeelementes, als einer Komponente des Überlagerungsantriebs, angreifen.

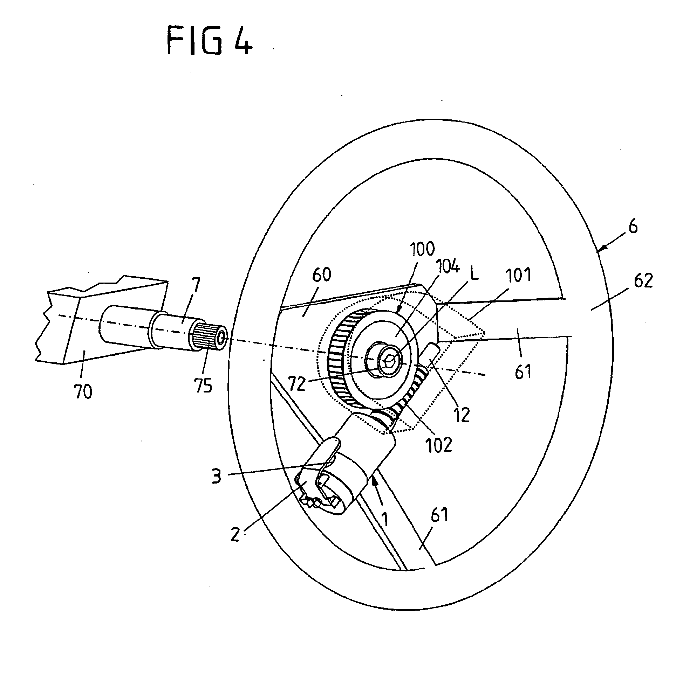

Nachfolgend wird anhand Figur 4 beispielhaft gezeigt werden, wie ein Aktuator 1 der in den Figuren 1 bis 3C dargestellten Art als Bestandteil eines Überlagerungsantriebs zusammen mit den dem Aktuator 1 nachgeordneten Getriebeelementen sowie zusammen mit der Arretierungseinrichtung 2, 3, 4 des Antriebs in ein Kraftfahrzeuglenkrad einzubauen ist.

In Figur 4 ist ein Lenkrad 6 eines Kraftfahrzeugs dargestellt, das einen als Lenkradnabe 60 bezeichneten Basisbereich sowie einen hiermit durch Speichen 61 verbundenen Lenkradkranz 62 aufweist. Der Lenkradkranz 62 dient zur drehenden Betätigung des Lenkrades 6 durch einen Fahrer, indem dieser das Lenkrad 6 am Lenkradkranz 62 ergreift und um die Lenkachse L dreht.

Der als Lenkradnabe 60 bezeichnete Basisbereich des Lenkrades 6 dient zur Anbindung des Lenkrades 6 an eine (in einem Kraftfahrzeug z.B. in einer Lenksäule 70 gelagerten) Lenkwelle 7, die hierfür mit einem Anschlusszapfen 75 versehen ist. So wird jede Drehbewegung des Lenkrades 6 in eine Drehbewegung der Lenkwelle 7 um einen bestimmten Lenkwinkel umgesetzt. Die konkrete Anbindung des Lenkrades 6 an die Lenkwelle 7 wird weiter unten im Zusammenhang mit dem Überlagerungsgetriebe 100 noch näher beschrieben werden.

Vorliegend ist eine Drehbewegung der Lenkwelle 7 nicht nur durch (manuelle) Betätigung des Lenkrades 6 am Lenkradkranz 62 möglich sondern auch durch Betätigung einer sogenannten Überlagerungslenkung mittels eines am Lenkrad 6 angeordneten Aktuators 1 der in den Figuren 1 bis 3C dargestellten Art.

Der Aktuator 1 ist - zusammen mit der zugeordneten Arretierungseinrichtung 2, 3, 4 - als Bestandteil eines Überlagerungsantriebs 1, 100 am Lenkrad 6 angeordnet, und zwar genauer an einer Lenkradspeiche 61 im Bereich von deren Übergang zur als Lenkradnabe 60 bezeichneten Basis des Lenkrades 6.

Der Aktuator 1, hier in Form eines Antriebsmotors, treibt (über eine Antriebswelle 12) ein nachgeordnetes Überlagerungsgetriebe 102, 104 an, welches im Ausführungsbeispiel eine mit der Antriebswelle 12 des Aktuators 1 gekoppelte, nämlich hierauf gelagerte, Antriebsschnecke 102 und ein mit der Antriebsschnecke 102 in Eingriff stehendes Schneckenrad 104 umfasst. Letzteres ist um die Lenkachse L des Lenkrades 6 drehbar gelagert. Alternativ kann die Antriebsschnecke 102 einstückiger Bestandteil der Antriebswelle 12 sein.

Zur Aufnahme der Getriebeelemente 102, 104 des Überlagerungsgetriebes ist ein in Figur 4 gestrichelt angedeutetes Getriebegehäuse 101 vorgesehen, das im Ausführungsbeispiel am Basisbereich des Lenkrades 6, also an der Lenkradnabe 60, angeordnet ist.

Im Betrieb des Aktuators 1 wird die mit dem Aktuator 1 gekoppelte Schnecke 102 gedreht und hierdurch wiederum das Schneckenrad 104 angetrieben, welches derart mit der Lenkwelle 7 gekoppelt ist, dass eine Drehung des Schneckenrades 104, ausgelöst durch den Betrieb des Aktuators 1, eine Drehbewegung der Lenkwelle 7 relativ zum Lenkrad 6 um einen bestimmten Überlagerungswinkel auslöst.

Die durch den Überlagerungsantrieb 1, 100, also durch den Aktuator 1 und das nachgeordnete Überlagerungsgetriebe 100, ausgelöste Drehbewegung der Lenkwelle 7 um einen Überlagerungswinkel ist unabhängig von einer durch manuelle Betätigung des Lenkrades 6 am Lenkradkranz 62 ausgelösten Drehbewegung der Lenkwelle 7 um einen bestimmten Lenkwinkel. D.h., bei gleichzeitiger Betätigung der Lenkwelle 7 einerseits manuell über den Lenkradkranz 62 des Lenkrades 6 und andererseits über den Überlagerungsantrieb 1, 100 kommt es zu einer Drehbewegung der Lenkwelle 7 um einen resultierenden Drehwinkel, der sich aus dem besagten Lenkwinkel und einem hiermit überlagerten Überlagerungswinkel zusammensetzt.

Eine geeignete Anbindung eines Lenkrades 6 an eine Lenkwelle 7, insbesondere über einen der Lenkwelle 7 zugehörigen Zapfen 75 und eine zugeordnete lenkradseitige Hülse bzw. Buchse, welche eine Einwirkung des Lenkrades 6 auf die Lenkwelle 7 einerseits durch manuelles Drehen des Lenkrades 6 und andererseits durch den lenkradseitigen Überlagerungsantrieb 1, 100 zulässt, ist in der WO 2007/009420 A1 beschrieben. Konkret greift hierbei eine lenkradseitige Hülse über den lenkwellenseitigen Zapfen 75 und beide werden durch ein Befestigungsmittel, z.B. eine Schraube 72, entlang der Lenkachse L miteinander verbunden. Auf jenes Dokument wird hinsichtlich der Anbindung des Lenkrades 6 an die Lenkwelle 7 (z.B. über eine Schraube 72) voll inhaltlich Bezug genommen.

Vorliegend kann insbesondere vorgesehen sein, dass der Zapfen 75 der Lenkwelle 7 mit dem abtriebseitigen Getriebeelement (Scheckenrad 104) des Überlagerungsgetriebes 100 drehfest verbunden und durch geeignete Befestigungsmittel fixiert wird. Das abtriebsseitige Getriebeelement in Form eines Schneckenrades 104 sowie das darin eingreifende weitere Getriebeelement in Form einer Schnecke 102 sind in dem Getriebegehäuse 101 angeordnet. Indem das Getriebegehäuse 101 mit dem Lenkrad 6 in dessen Basisbereich (Lenkradnabe 60) verbunden wird, kann bei einer Drehung des Lenkrades 6 um die Lenkachse L, insbesondere hervorgerufen durch manuelle Betätigung des Lenkrades am Lenkradkranz 6, die Lenkwelle 7 (um ihre Längsachse) mitgedreht werden. Außerdem kann auch das Überlagerungsgetriebe 100 - bei Betätigung durch den Aktuator 1 - auf die Lenkwelle 7 einwirken, um diese zu drehen, und zwar durch Einwirkung auf die Lenkwelle 7 über das abtriebsseitige Getriebeelement in Form eines Schneckenrades 104.

Die beschriebene Anbindung des Lenkrades 6 an die Lenkwelle 7 ermöglicht insbesondere eine Relativbewegung, nämlich ein relatives Verdrehen, der Lenkwelle 7 bezüglich des Lenkrades 6. Daher muss der bei manueller Betätigung des Lenkrades 6 resultierende Drehwinkel der Lenkwelle 7 nicht mit dem durch (manuelle) Drehung des Lenkrades 6 erzeugten Lenkwinkel übereinstimmen, sondern diesem Lenkwinkel kann ein Überlagerungswinkel, erzeugt durch einen Betrieb des Aktuators 1 und hierdurch ausgelöste Betätigung des Überlagerungsgetriebes 100, überlagert sein. (Es sei denn der Überlagerungsantrieb 1, 100 ist nicht aktiv sondern vielmehr mittels der Arretierungseinrichtung 2, 3, 4 arretiert; dann kann eine Drehung der Lenkwelle 7 ausschließlich durch mechanische Betätigung des Lenkrades 6 erfolgen.) Die Anbindung zwischen Lenkrad 6 und Lenkwelle 7 ermöglicht also eine Drehbewegung der Lenkwelle 7 um einen resultierenden Drehwinkel, der - wegen der Überlagerung eines von dem Überlagerungsantrieb 1, 100 erzeugten Überlagerungswinkels - nicht mit dem durch manuelle Betätigung des Lenkrades 6 erzeugten Lenkwinkel übereinstimmen muss, was einem relativen Verdrehen von Lenkrad 6 und Lenkwelle 7 zueinander bezüglich der Lenkachse L entspricht.

Dadurch, dass vorliegend der Überlagerungsantrieb 1, 100 einschließlich der zugehörigen Arretierungseinrichtung 2, 3, 4 vollständig in das Lenkrad 6 integriert ist und das Lenkrad 6 wiederum an gängige (vom Lenkrad separate) Lenkwellen 7 mit Anschlusszapfen 75 anbindbar ist, bedarf das Vorsehen einer Überlagerungslenkung keiner besonderen baulichen Anpassungen des Lenksystems außerhalb des Lenkrades 6. Lediglich der lenkwellenseitige Zapfen 75 und die zugeordnete lenkradseitige Hülse sind aufeinander abzustimmen.

Es ist insbesondere nicht erforderlich, die Lenkwelle 7 mehrteilig auszubilden, wie es bei den in die Lenkwelle integrierten Überlagerungslenkungen notwendig ist. Weiterhin sind keine besonderen baulichen Maßnahmen an der die Lenkwelle 7 umgebenden Lenksäule vorzunehmen - im Gegensatz zu solchen Fällen, bei denen eine an der Lenkwelle vorgesehene Überlagerungslenkung eine Ausgestaltung der Lenksäule erforderlich macht, welche eine Integration eines Überlagerungsantriebs erlaubt.

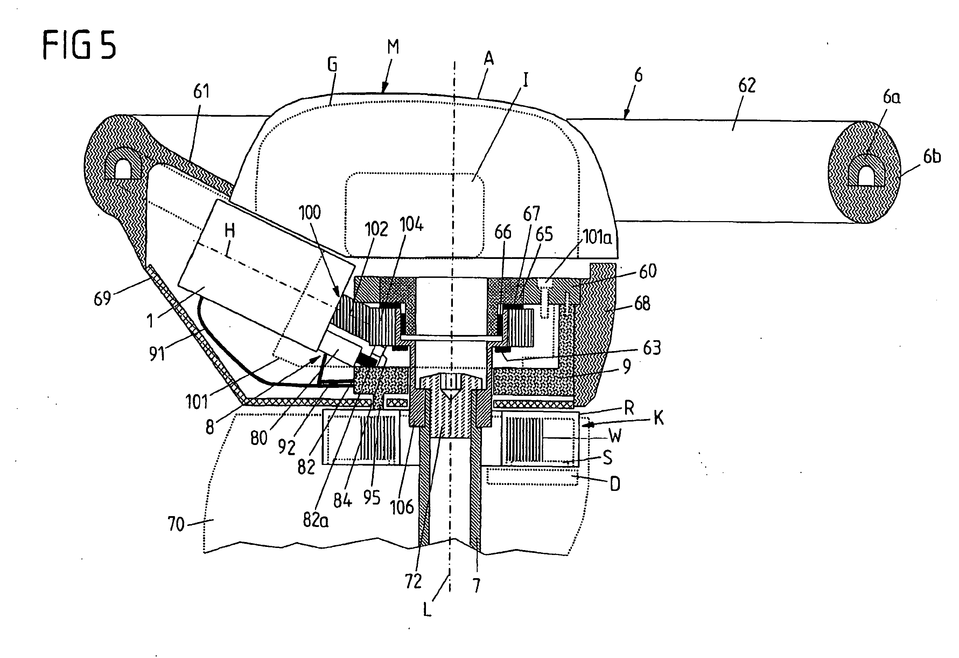

Figur 5 zeigt eine Abwandlung des Ausführungsbeispieles aus den Figuren 1 bis 4, und zwar in einer Gesamtdarstellung eines Lenkrades, ähnlich der Figur 4, jedoch in einer Schnittansicht.

Das in Figur 5 dargestellte Lenkrad 6 entspricht in seinem grundsätzlichen Aufbau dem in Figur 4 gezeigten Lenkrad. Es wird gebildet durch ein Lenkradskelett 6a und eine Umhüllung 6b, zum Beispiel in Form eines Schaums, und definiert eine Lenkradnabe 60 sowie einen Lenkradkranz 62, die über Speichen 61 miteinander verbunden sind.

Im zentralen Bereich des Lenkrades - bei bestimmungsgemäßem Einbau in ein Kraftfahrzeug von einem Fahrzeugführer aus gesehen oberhalb der Lenkradnabe 60 - ist ein Airbagmodul M angeordnet, das in bekannter Weise einen zum Schutz eines Fahrzeuginsassen, nämlich hier des Fahrers, aufblasbaren Gassack G, eine Gaserzeugungseinrichtung (Inflator I) zum Aufblasen des Gassackes G sowie eine Modulabdeckung A umfasst.

Das Lenkrad 6 dient zur Betätigung einer Lenkwelle 7, welche sich in einer (karosseriefesten) Lenksäule 70 erstreckt. Die Kopplung des Lenkrades 6 an die Lenkwelle 7 unter Zwischenschaltung eines Überlagerungsantriebes 1, 100 wird nachfolgend noch näher beschrieben werden, insbesondere hinsichtlich der Unterschiede verglichen mit dem Ausführungsbeispiel der Figuren 1 bis 4.

Zunächst sei noch erwähnt, dass zur Versorgung lenkradseitiger, also gemeinsam mit dem Lenkrad 6 drehbarer, elektrischer und/oder elektronischer Bauelemente eine Kontakteinheit K vorgesehen ist, die als karosserieseitige Baugruppe einen an der Lenksäule 70 angeordneten Stator S, als lenkradseitige Baugruppe einen gemeinsam mit dem Lenkrad drehbaren Rotor R sowie als elektrische Verbindung zwischen diesen beiden Baugruppen ein flexibles Leiterelement in Form einer so genannten Wickelfeder W umfasst. Eine bekannte Kontakteinheit mit Stator und Rotor zeigt die DE 197 27 856 A1, auf die hinsichtlich Einzelheiten des möglichen Aufbaus und der Funktion einer Kontakteinheit Bezug genommen wird. Ferner ist ein Winkelsensor (Detektor D) vorgesehen, um Relativbewegungen des Lenkrades 6 oder der Lenkwelle 7 bezüglich einer karosseriefesten Komponente erfassen zu können.

Sowohl das Airbagmodul M als auch die Kontakteinheit K können in entsprechender Weise auch bei dem Lenkrad der Figur 4 vorgesehen sein; sie wurden in Figur 4 lediglich aus Gründen der Übersichtlichkeit der dortigen perspektivischen Darstellung nicht mit dargestellt.

Wie beim Ausführungsbeispiel der Figuren 1 bis 4 ist auch dem Lenkrad 6 aus Figur 5 ein Überlagerungsantrieb 1, 100 zugeordnet, so dass die dem Lenkrad 6 zugeordnete Lenkwelle 7 sowohl in üblicher Weise durch Betätigung des Lenkradkranzes 6 als auch (ergänzend) durch den Überlagerungsantrieb 1, 100 betätigbar ist, und zwar jeweils durch Erzeugung einer Drehbewegung der Lenkwelle 7 um die Lenkachse L. Der Überlagerungsantrieb 100 umfasst einen Aktuator 1, zum Beispiel in Form eines Elektromotors, sowie ein vom Aktuator angetriebenes Überlagerungsgetriebe 100, mit einer vom Aktuator 1 drehbaren Antriebsschnecke 102, die z.B. auf einer Antriebswelle des Aktuators 1 (drehfest) angeordnet ist, sowie mit einem mit der Antriebsschnecke 102 in Eingriff stehenden Schneckenrad 104. Das Überlagerungsgetriebe 100 ist dabei in einem Getriebegehäuse 101 angeordnet.

Hinsichtlich der Anordnung des Überlagerungsantriebes 1, 100 am Lenkrad 6 bestehen die beiden folgenden wichtigen Unterschiede verglichen mit des Ausführungsform der Figur 4: Zum einen ist der Aktuator 1 des Überlagerungsantriebs 1, 100 gemäß Figur 5 derart (im Bereich einer Lenkradspeiche 61) angeordnet, dass sich dessen Antriebswelle bzw. Antriebsachse (Hauptachse H) geneigt zur Lenkwelle 7 (Lenkachse L) des Lenkrades 6 erstreckt, und zwar im Wesentlichen mit der selben Neigung wie die Lenkradspeichen 61; nicht aber senkrecht (unter einem Winkel von 90°) zur Lenkwelle 7 erstreckt, wie im Ausführungsbeispiel der Figur 4 vorgesehen. Zum anderen sind die wesentlichen Bestandteile des Überlagerungsgetriebes 100, nämlich vorliegend eine vom Aktuator 1 angetriebene Antriebsschnecke 102 und das nachgeordnete Schneckenrad 104 beim Ausführungsbeispiel der Figur 5 - von einem Fahrzeugführer aus gesehen - hinter der Lenkradnabe 60 angeordnet, während beim Ausführungsbeispiel der Figur 4 die entsprechenden Komponenten 102, 104 des Überlagerungsgetriebes 100 vor der Lenkradnabe 60 vorgesehen sind.

An dem Schneckenrad 104 des Überlagerungsgetriebes 100 ist ein hülsenartiger Fortsatz 106 angebracht, und zwar im Ausführungsbeispiel konkret auf der (der Lenkwelle 7 zugewandten) Innenseite des Schneckenrades 104 (welche der mit der Antriebsschnecke 102 zusammenwirkenden Außenseite abgewandt ist). Der Fortsatz 106 erstreckt sich hülsenartig entlang der Lenkwelle 7 und ist über geeignete Lager 66, 67, zum Beispiel in Form von Wälzlagern, hier ein Radiallager 66 und ein Axiallager 67 ausgeführt als Nadellager, an einem Lagerzapfen 65 der Lenkradnabe 60 drehbar gelagert. Der Lagerzapfen 65 ist dabei so ausgebildet und ausgerichtet, dass das Schneckenrad 104 (über den Fortsatz 106 und die Lager 66, 67) um die Lenkachse L drehbar angeordnet ist. Der Lagerzapfen 65 kann dabei insbesondere in die Lenkradnabe 60 eingegossen sein.

Der hülsenartige Fortsatz 106 kann wiederum einerseits einstückig an dem Schneckenrad 104 angeformt sein oder ein separates Teil bilden, das in geeigneter Weise, zum Beispiel durch Schweißen, Schrumpfen oder Angießen mit dem Schneckenrad 104 verbunden ist.

Der Fortsatz 106 ist weiterhin mittels geeigneter Befestigungsmittel 72, hier in Form einer (zentralen) Schraube, drehfest an der Lenkwelle 7 fixiert. Im Ergebnis ist somit das Schneckenrad 104 (drehfest) - über den hülsenförmigen Fortsatz 106 - an der Lenkwelle 7 festgelegt. Der hülsenförmige Fortsatz 106 kann hierzu im Bereich der Lenkwelle 7 zusätzlich eine Innenverzahnung aufweisen, die mit einer zugeordneten Außenverzahnung der Lenkwelle 7 zusammenwirkt. Da andererseits das Schneckenrad 104 (zum Beispiel über den Aktuator 1 und das Getriebegehäuse 101) am Lenkrad 6 angeordnet ist, erfolgt über das Schneckenrad 104 und dessen hülsenförmigen Fortsatz 106 zugleich auch eine Anbindung des Lenkrades 6 insgesamt an die Lenkwelle 7. Eine derartige Anbindung zeigt z.B. die DE 10 2005 034 636 A1.

Das Überlagerungsgetriebe 100, insbesondere die Antriebsschnecke 102 und das Schneckenrad 104, sind in einem in Figur 5 punktiert angedeuteten Getriebegehäuse 101 aufgenommen, welches über geeignete Befestigungsmittel 101a, zum Beispiel in Form von Schrauben, am Lenkrad 6, insbesondere an der Lenkradnabe 60, festgelegt sein kann. Am Getriebegehäuse 101 kann zudem mindestens ein weiterer Lagerbereich, zum Beispiel in Form eines Axiallagers (Nadellager 63), zur Lagerung des Schneckenrades 104 (über den hülsenförmigem Fortsatz 106) vorgesehen sein. Das Getriebegehäuse 101 ist zur Lenkradnabe 60 hin offen, so dass die Lenkradnabe 60 (zusammen mit dem Lagerzapfen 65) einen Gehäusedeckel für das Getriebegehäuse 101 bildet.

Ein dem Aktuator 1 zugewandter Abschnitt des Getriebegehäuses 101 dient vorliegend zur Befestigung des Aktuators 1 am Getriebegehäuse 101, so dass dieses im Ergebnis nicht nur zur Lagerung des Überlagerungsgetriebes 100 dient, sondern zusätzlich auch zur Halterung des Aktuators. Alternativ kann der Aktuator 1 auch unmittelbar am Lenkrad 6 bzw. Lenkradskelett 6a festgelegt werden.

Dem Überlagerungsantrieb 1, 100 ist wiederum eine Arretierungseinrichtung 8 zugeordnet, die im Ausführungsbeispiel der Figur 5 einen eigenen Aktuator/Antrieb 80 (z.B. in Form eines Linearmotors, eines Relais oder eines pneumatischen Antriebs) als Betätigungsmittel, einen hiervon angetriebenen Verriegelungsbolzen 82 als Halteelement und eine mit der Antriebsschnecke 102 fest verbundene (und mit dieser mitdrehende) Verriegelungsscheibe 84 aufweist. Die Verriegelungsscheibe 84 umfasst z.B. (im Bereich ihres äußeren Randes) Aussparungen, die im Ausführungsbeispiel entlang des Umfanges der Verriegelungsscheibe 84 verteilt sein sollen und in die der Verriegelungsbolzen 82 zur Verhinderung der Rotation der Verriegelungsscheibe 84 (und damit der Antriebsschnecke 102) form- und/oder kraftschlüssig eingreifen kann, und zwar mit einem als Fixiermittel 82a dienenden (End-)Abschnitt). Durch Betätigung des Aktuators 80 (z.B. durch Unterbrechung der Stromversorgung bei einem Linearmotor/Relais) ist der Verriegelungsbolzens 82 mit der Verriegelungsscheibe 84 zur Festsetzung der Antriebsschnecke 102 des Überlagerungsantriebs 1, 100 in Eingriff bringbar, um den Überlagerungsantrieb zu arretieren. Die kann beispielsweise durch eine vom Aktuator 80 ausgelöste Längsverschiebung des Verriegelungsbolzens 82 erfolgen, wobei dieser mit der Verriegelungsscheibe 84 bzw. einer Aussparung hiervon in Eingriff treten kann. Figur 5 zeigt dabei den arretierten Zustand (verriegelten Zustand) der Arretierungseinrichtung 8, in der der Verriegelungsbolzen 82 form-/kraftschlüssig auf die Verriegelungsscheibe 84 einwirkt.

Am Lenkrad ist, hier überdeckt von einer Umschäumung 68 bzw. Verkleidung 69, weiterhin eine Steuereinheit 9 (ECU) mit elektronischen Baugruppen zur Steuerung der Aktuatoren/Antriebe 1, 8 und weiterer (drehfest) mit dem Lenkrad 6 verbundener elektrischer/elektronischer Bauelemente angeordnet. Fahrzeugseitig erfolgt die Zufuhr von Strom und elektrischen Signalen zur Steuereinheit 9 über die Kontakteinheit K, welche das Lenkrad 6 elektrisch mit dem Bordnetz und der zentralen Elektronik eines Kraftfahrzeugs verbindet. Die Steuereinheit 9 befindet sich im Ausführungsbeispiel der Figur 5 hinter der Lenkradnabe 60, ist also einem Fahrzeugführer, der das Lenkrad 6 bestimmungsgemäß betätigt, abgewandt.

Zur Anbindung an die Kontakteinheit K, genauer an deren gemeinsam mit dem Lenkrad 6 drehbaren Rotor R, ist an der Steuereinheit 9 ein entsprechendes elektrisches Verbindungsglied 95, zum Beispiel in Form eines Steckers, vorgesehen. Von der Steuereinheit 9 ausgehend können elektrischer Strom sowie elektrische Signale zu den einzelnen elektrischen Komponenten des Lenkrades 6 übertragen werden, wobei hier beispielhaft nur die elektrischen Verbindungen 91, 92 mit den beiden Aktuatoren 1, 80, nämlich dem Aktuator 1 des Überlagerungsantriebs 1, 100 und mit dem Aktuator 80 der Arretierungseinrichtung 8, dargestellt sind.

Mit dem Lenkrad 6 aus Figur 5 kann eine Lenkbewegung durch Einwirkung auf die Lenkwelle 7 wie folgt ausgelöst werden:
Zum einen kann in üblicher Weise das Lenkrad 6 durch manuelle Einwirkung auf den Lenkradkranz 62 um die Lenkachse L gedreht werden, wobei diese Drehbewegung über den (selbsthemmend ausgestalteten) Überlagerungsantrieb, 1, 100, nämlich eingangsseitig über dessen Getriebegehäuse 101 und ausgangsseitig dessen hülsenförmigem Fortsatz 106, auf die Lenkwelle 7 übertragen wird, so dass eine Drehbewegung des Lenkrades 6 zu einer entsprechenden Drehung der Lenkwelle 7 führt.
Andererseits kann, völlig unabhängig von einer Betätigung des Lenkrades 6 über den Lenkradkranz 62, eine Drehbewegung der Lenkwelle 7 um die Lenkachse L. auch durch den Überlagerungsantrieb 1, 100 ausgelöst werden, indem dessen Aktuator 1 aktiviert wird und dieser über die auf der Antriebswelle des Aktuators angeordnete Antriebsschnecke 102 auf das Schneckenrad 104 einwirkt, welches wiederum über den hülsenartigen Fortsatz 106 mit der Lenkwelle 7 verbunden ist, so dass eine Drehbewegung des Schneckenrades 104 um die Lenkachse L, ausgelöst durch einen Betrieb des Aktuators 1, eine entsprechende Drehbewegung der Lenkwelle 7 erzeugt.

Die Aktivierung und Deaktivierung des Aktuators 1 des Überlagerungsantriebes 1, 100 erfolgt mittels der Steuereinheit 9 und über die (direkte) elektrische Verbindung 91 zwischen der Steuereinheit 9 und dem Aktuator 1. Im Unterschied zu dem Ausführungsbeispiel der Figuren 1 bis 4 ist keine (mechanische bzw. magnetische) Zwangskopplung zwischen den Mitteln zur Unterbrechung der Stromversorgung (sowie zur Erzeugung eines Kurzschlusses) zur Deaktivierung des Aktuators 1 des Überlagerungsantriebs 1, 100 einerseits und der Einrichtung zur Arretierung des Überlagerungsantriebes 1, 100 andererseits vorgesehen. Vielmehr werden beide Funktionen durch die Ansteuerung der (separaten) Aktuatoren 1, 80 getrennt realisiert. Die Mittel zur Deaktivierung des Aktuators 1 (durch Unterbrechung der Stromversorgung/Erzeugung eines Kurzschlusses) sind hier schaltungstechnisch als Komponenten der Steuereinheit 9 ausgebildet und beispielsweise als mindestens ein Thyristor ausgestaltet.

Die Ansteuerung des Überlagerungsgetriebes 1, 100 einerseits sowie der Arretierungseinrichtung 8 andererseits erfolgt (mittels der Steuereinheit 9) bevorzugt in der Weise, dass zur Beendigung einer durch den Überlagerungsantrieb 1, 100 erzeugten Drehbewegung der Lenkwelle 7 zunächst der Aktuator 1 (durch Unterbrechung der Stromzufuhr/Erzeugung eines Kurzschlusses über die Verbindung 91) deaktiviert wird, bevor anschließend eine Arretierung erfolgt, indem die Arretierungseinrichtung 8 (über die zugeordnete Verbindung 92) mittels der Steuereinheit 9 aktiviert wird (z.B. ebenfalls durch die Unterbrechung der Stromzufuhr) und über den vom Aktuator 80 der Arretierungseinrichtung 8 betätigbaren Verriegelungsbolzen 82 und die nachgeordnete Verriegelungsscheibe 84 verriegelnd auf die Antriebsschnecke 102 des Überlagerungsantriebs 1, 100 einwirkt. Dadurch, dass der Aktuator 1 des Überlagerungsantriebes 1, 100 bereits elektrisch gebremst wurde, nämlich durch Stromunterbrechung (und gegebenenfalls ergänzend durch Kurzschluss, wie vorstehend anhand der Figuren 1 bis 4 beschrieben), wenn die Arretierungseinrichtung 8 aktiviert wird, um auf den Überlagerungsantrieb 1, 100, genauer dessen Antriebsschnecke 102 einzuwirken, ist die mechanische Belastung der Arretierungseinrichtung 8 entsprechend reduziert. Die Komponenten 80, 82, 84 der Arretierungseinrichtung 8 können dementsprechend kleiner dimensioniert werden, was angesichts des geringen im Lenkrad 6 zur Verfügung stehenden freien Bauraumes vorteilhaft ist.

## Patentansprüche

1. Lenkrad für ein Kraftfahrzeug, mit
- einem Lenkradkranz (62) zur drehenden Betätigung des Lenkrades (6),
- einer Lenkradnabe (60) zur Verbindung des Lenkrades (6) mit einer von dem Lenkrad (6) separaten Lenkwelle (7) eines Kraftfahrzeugs und
- einem Überlagerungsantrieb (1, 100), der einen Aktuator (1) und ein dem Aktuator (1) nachgeordnetes Überlagerungsgetriebe (100) aufweist, zur Betätigung einer Überlagerungslenkung, mit der ein durch Betätigung des Lenkradkranzes (62) erzeugter Lenkwinkel durch einen von der Überlagerungslenkung erzeugbaren Überlagerungswinkel überlagerbar ist, so dass sich eine jeweilige Drehbewegung einer mit dem Lenkrad (6) verbundenen Lenkwelle (7) aus einem durch Betätigung des Lenkradkranzes (62) erzeugbaren Lenkwinkel und einem durch Betätigung der Überlagerungslenkung erzeugbaren Überlagerungswinkel zusammensetzt, wobei die Überlagerungslenkung Komponenten (1, 12, 100, 102, 104) aufweist, die zur Erzeugung des Überlagerungswinkels dienen,
**dadurch gekennzeichnet,**
**dass** am Lenkrad (6) eine Arretierungseinrichtung (2, 3, 4; 8) vorgesehen ist, mit der der Überlagerungsantrieb (1, 100) durch form- und/oder kraftschlüssige Einwirkung arretierbar ist, wobei die Arretierungseinrichtung (2, 3, 4; 8) an dem Überlagerungsantrieb (1, 100) angeordnet ist, wobei ein Unterbrechungsmechanismus (2, 51, 53; 9) vorgesehen ist, mit dem vor oder bei Aktivierung der Arretierungseinrichtung (2, 3, 4; 8) die Energieversorgung, insbesondere Stromversorgung, des Überlagerungsantriebs (1, 100) unterbrochen wird, so dass die Arretierungseinrichtung (2, 3, 4; 8) den Überlagerungsantrieb (1, 100) arretiert, und wobei der Unterbrechungsmechanismus (9) elektrische oder elektronische Schaltmittel zur Unterbrechung der Energieversorgung des Überlagerungsantriebs (1, 100) aufweist.

2. Lenkrad nach Anspruch 1, **dadurch gekennzeichnet, dass** die Arretierungseinrichtung (2, 3, 4; 8) mindestens ein Halteelement (2, 82) umfasst, das in einer Halteposition form- und/oder kraftschlüssig auf eine Komponente (12, 102) des Überlagerungsantriebs (1, 100) einwirkt, um diesen zu arretieren.

3. Lenkrad nach Anspruch 2, **dadurch gekennzeichnet, dass** eine Bewegungserzeugungsvorrichtung (3, 4; 80) vorgesehen ist, mittels der das Halteelement (2, 82) zwischen der Halteposition und einer Freigabeposition hin und her bewegbar ist, in welch letzterer das Halteelement den Überlagerungsantrieb (1, 100) zur Erzeugung eines Überlagerungswinkels freigibt.

4. Lenkrad nach einem der vorhergehenden Ansprüche, **dadurch gekennzeichnet, dass** die Arretierungseinrichtung (2, 3, 4; 8) zur Arretierung des Überlagerungsantriebs (1, 100) mit einem Arretierungsabschnitt (12a, 84) einer Drehmoment übertragenden Komponente (12, 102) des Überlagerungsantriebs (1, 100) in Eingriff bringbar ist, wobei die Drehmoment übertragende Komponente (12) des Überlagerungsantriebs (1, 100) durch eine Antriebswelle (12) des Aktuators (1) oder ein hiermit verbundenes Element (102) gebildet wird.

5. Lenkrad nach einem der vorhergehenden Ansprüche, **dadurch gekennzeichnet, dass** eine Kurzschlussbremse (22b, 52b, 53b) vorgesehen ist, mit der vor oder bei Aktivierung der Arretierungseinrichtung (2, 3, 4; 8), so dass diese den Überlagerungsantrieb (1, 100) arretiert, ein elektrisch betriebener Aktuator (1) des Überlagerungsantriebs (1, 100) durch Erzeugung eines Kurzschlusses gebremst wird.

6. Lenkrad nach Anspruch 3 oder Anspruch 4 , soweit rückbezogen auf Anspruch 3, **dadurch gekennzeichnet, dass** sich das Halteelement (2, 82) im deaktivierten Zustand der Arretierungseinrichtung (2, 3, 4; 8) in seiner Freigabeposition und im aktivierten Zustand der Arretierungseinrichtung (2, 3, 4; 8) in seiner Halteposition befindet, wobei eine Bewegungserzeugungsvorrichtung (3, 4; 80, 82), mit der die Arretierungseinrichtung (2, 3, 4; 8) in ihren aktivierten Zustand, in dem sie den Überlagerungsantrieb (1, 100) arretiert, sowie in ihren deaktivierten Zustand bringbar ist, einen Aktuator (3; 80) und ein hiervon betätigbares Halteelement (2, 82) umfasst.

7. Lenkrad nach Anspruch 6, **dadurch gekennzeichnet, dass** die Arretierungseinrichtung (2, 3, 4; 8) durch Bestromung des Aktuators (3; 80) in ihren deaktivierten Zustand bringbar ist, in dem der Aktuator (3; 80) derart auf das Halteelement (2; 82) einwirkt, dass das Halteelement (2; 82) seine Freigabeposition einnimmt, und dass die Arretierungseinrichtung (2, 3, 4; 8) durch Unterbrechung der Stromversorgung des Aktuators (3; 80) in ihren aktivierten Zustand bringbar ist, in dem das Halteelement (2; 82) seine Halteposition einnimmt,

8. Lenkrad nach Anspruch 2 oder einem der Ansprüche 2 bis 6, soweit rückbezogen auf Anspruch 2, **dadurch gekennzeichnet, dass** am Halteelement (2, 82) mindestens ein Fixierelement (25, 82a) zur Einwirkung auf eine Komponente (12, 102) des Überlagerungsantriebs (1, 100) vorgesehen ist, um diesen zu arretieren, wobei das Fixierelement (25, 82a) zur klemmenden und/oder formschlüssigen Einwirkung auf die Komponente (12, 102) des Überlagerungsantriebs (1, 100) ausgebildet und vorgesehen ist.

9. Lenkrad nach Anspruch 2 oder einem der Ansprüche 3 bis 8, soweit rückbezogen auf Anspruch 2, **dadurch gekennzeichnet, dass** das Halteelement (2, 82) verschieblich oder verschwenkbar gelagert ist, um dieses zwischen einer Freigabeposition und einer Halteposition bewegen zu können.

10. Lenkrad nach Anspruch 2 oder einem der Ansprüche 2 bis 9, soweit rückbezogen auf Anspruch 2, **dadurch gekennzeichnet, dass** das Halteelement (82) als ein in mit einer Verriegelungsscheibe (84) in Eingriff bringbarer Verriegelungsbolzen ausgebildet ist.

11. Lenkrad nach einem der vorhergehenden Ansprüche, **dadurch gekennzeichnet, dass** das Überlagerungsgetriebe (100) hinter der Lenkradnabe (60) angeordnet ist.

12. Lenkrad nach einem der vorhergehenden Ansprüche, **dadurch gekennzeichnet, dass** eine am Lenkrad (6) angeordnete Steuereinheit (9) zur Steuerung des Überlagerungsantriebs (1, 100) hinter der Lenkradnabe (60) angeordnet ist.

13. Lenkrad nach einem der vorhergehenden Ansprüche, **dadurch gekennzeichnet, dass** der Überlagerungsantrieb (1, 100) eine Antriebsachse (H) aufweist, die schräg zur Lenkwelle (7) geneigt ist.

14. Lenksystem für ein Kraftfahrzeug, mit einer Lenkwelle und mit einem Überlagerungsantrieb zur Betätigung einer Überlagerungslenkung, mittels der ein durch manuelle Betätigung des Lenksystems über ein Lenkrad erzeugter Lenkwinkel durch einen von der Überlagerungslenkung erzeugbaren Überlagerungswinkel überlagerbar ist, so dass sich eine jeweilige Drehbewegung der Lenkwelle aus einem durch manuelle Betätigung erzeugbaren Lenkwinkel und einem durch die Überlagerungslenkung erzeugbaren Überlagerungswinkel zusammensetzt,
**dadurch gekennzeichnet, dass**
die Überlagerungslenkung Komponenten (1, 12, 100, 102, 104) aufweist, die zur Erzeugung des Überlagerungswinkels dienen, und eine Arretierungseinrichtung (2, 3, 4, 8) vorgesehen ist, mit der der Überlagerungsantrieb (1, 100) durch form- und/oder kraftschlüssige Einwirkung arretierbar ist, und weiterhin eine Kurzschlussbremse (22b, 52b, 53b) vorgesehen ist, mit der vor oder bei Aktivierung der Arretierungseinrichtung (2, 3, 4), so dass diese den Überlagerungsantrieb (1, 100) arretiert, ein elektrisch betriebener Aktuator (1) des Überlagerungsantriebs (1, 100) durch Erzeugung eines Kurzschlusses gebremst wird.

15. Lenksystem nach Anspruch 14 mit einem Lenkrad nach einem der Ansprüche 1 bis 13.

## Claims

1. Steering wheel for a motor vehicle, having
- a steering wheel rim (62) for rotating actuation of the steering wheel (6),
- a steering wheel hub (60) for connection of the steering wheel (6) with a steering shaft (7) of a motor vehicle, said steering shaft (7) being separate from the steering wheel (6), and
- a superposition drive (1, 100) which comprises an actuator (1) and a superposition gearing (100) subordinate to the actuator (1) for actuating a superposition steering by means of which a steering angle created by actuating the steering wheel rim (62) can be superposed by a superposition angle that can be created by the superposition steering so that a respective rotation movement of a steering shaft (7) connected with the steering wheel (6) is composed of a steering angle that can be created by actuating the steering wheel rim (62) and a superposition angle that can be created by actuating the superposition steering, wherein the superposition steering comprises components (1, 12, 100, 102, 104) which serve for creating the superposition angle,
**characterized**
**in that** an arresting appliance (2, 3, 4; 8) is provided on the steering wheel (6) by means of which the superposition drive (1, 100) can be arrested by positive and/or force-fit action, wherein the arresting appliance (2, 3, 4; 8) is arranged at the superposition drive (1, 100), wherein an interrupt mechanism (2, 51, 53; 9) is provided by means of which prior to or upon activation of the arresting appliance (2, 3, 4; 8) the power supply, particularly the current supply, for the superposition drive (1, 100) is interrupted, such that the arresting appliance (2, 3, 4; 8) arrests the superposition drive (1, 100), and wherein the interrupt mechanism (9) comprises electric or electronic switching means for the interruption of the power supply for the superposition drive (1, 100).

2. Steering wheel according to Claim 1, **characterized in that** the arresting appliance (2, 3, 4; 8) comprises at least one holding element (2, 82) that in a holding position has a positive and/or force-fit locking effect on a component (12,102) of the superposition drive (1, 100) to arrest said drive (1, 100).

3. Steering wheel according to Claim 2, **characterized in that** there is a movement-creating device (3, 4; 80) by means of which the holding element (2, 82) can be moved back and forth between the holding position and a release position, in the latter of which the holding element releases the superposition drive (1,100) to create a superposition angle.

4. Steering wheel according to any of the preceding claims, **characterized in that** the arresting appliance (2, 3, 4; 8) for arresting the superposition drive (1, 100) can be brought into engagement with an arresting portion (12a, 84) of a torque-transmitting component (12, 102) of the superposition drive (1, 100), wherein the torque-transmitting component (12) of the superposition drive (1, 100) consists of a drive shaft (12) of the actuator (1) or an element connected with it (102).

5. Steering wheel according to any of the preceding claims, **characterized in that** a short-circuit brake (22b, 52b, 53b) is provided by means of which prior to or upon activation of the arresting appliance (2, 3, 4; 8), so that said arresting appliance (2, 3, 4; 8) arrests the superposition drive (1, 100), an electrically powered actuator (1) of the superposition drive (1, 100) is decelerated by creating a short-circuit.

6. Steering wheel according to Claim 3 or to Claim 4, as far as referring back to Claim 3, **characterized in that** the holding element (2, 82) is positioned in its release position in the deactivated state of the arresting appliance (2, 3, 4; 8) and in its holding position in the activated state of the arresting appliance (2, 3, 4; 8), wherein a movement-creating device (3, 4; 80, 82) by means of which the arresting appliance (2, 3, 4; 8) can be brought into its activated state, in which state said arresting appliance (2, 3, 4; 8) arrests the superposition drive (1, 100), and into its deactivated state, comprises an actuator (3; 80) and a holding element (2, 82) that can be actuated by said actuator (3; 80).

7. Steering wheel according to Claim 6, **characterized in that** the arresting appliance (2, 3, 4; 8), by energizing the actuator (3; 80), can be brought into its deactivated state, in which state the actuator (3; 80) acts upon the holding element (2; 82) such that the holding element (2; 82) takes its release position, and **in that** the arresting appliance (2, 3, 4; 8), by interrupting the current supply for the actuator (3; 80), can be brought into its activated state, in which state the holding element (2; 82) takes its holding position.

8. Steering wheel according to Claim 2 or any of Claims 2 to 6, as far as referring back to Claim 2, **characterized in that** at least one fixing element (25, 82a) is provided on the holding element (2, 82) to act upon a component (12, 102) of the superposition drive (1, 100) to arrest said drive, wherein the fixing element (25, 82a) is designed and provided for having a jamming and/or positive locking effect on the component (12, 102) of the superposition drive (1, 100).

9. Steering wheel according to Claim 2 or any of Claims 3 to 8, as far as referring back to Claim 2, **characterized in that** the holding element (2, 82) is mounted slidably or pivotably, to be able to move said element (2, 82) between a release position and a holding position.

10. Steering wheel according to Claim 2 or any of Claims 2 to 9, as far as referring back to Claim 2, **characterized in that** the holding element (82) is designed as a locking bolt that can be brought into engagement with a locking plate (84).

11. Steering wheel according to any of the preceding Claims, **characterized in that** the superposition gearing (100) is located behind the steering wheel hub (60).

12. Steering wheel according to any of the preceding claims, **characterized in that** a control unit (9) located on the steering wheel (6) for the control of the superposition drive (1, 100) is located behind the steering wheel hub (60).

13. Steering wheel according to any of the preceding claims, **characterized in that** the superposition drive (1, 100) has a driving axle (H) which is inclined to the steering shaft (7).

14. Steering system for a motor vehicle, having a steering shaft and having a superposition drive for actuating a superposition steering by means of which a steering angle created by manual actuation of the steering system via a steering wheel can be superposed by a superposition angle that can be created by the superposition steering, so that a respective rotation movement of the steering shaft is composed of a steering angle that can be created by manual actuation and a superposition angle that can be created by the superposition steering,
**characterized in that**
the superposition steering comprises components (1, 12, 100, 102, 104) which serve for creating the superposition angle, and an arresting appliance (2, 3, 4, 8) is provided by means of which the superposition drive (1, 100) can be arrested by positive and/or force-fit action, and furthermore a short-circuit brake (22b, 52b, 53b) is provided, by means of which prior to or upon activation of the arresting appliance (2, 3, 4), so that said arresting appliance (2, 3, 4) arrests the superposition drive (1, 100), an electrically powered actuator (1) of the superposition drive (1, 100) is decelerated by creating a short-circuit.

15. Steering system according to Claim 14 with a steering wheel according to any of the Claims 1 to 13.

## Revendications

1. Volant pour un véhicule automobile avec
- une jante de volant (62) pour l'actionnement rotatif du volant (6),
- un moyeu de volant (60) pour la liaison du volant (6) avec un arbre de direction (7) séparé du volant (6) d'un véhicule automobile et
- un entraînement à superposition (1, 100) qui présente un actionneur (1) et une transmission de superposition (100) disposée en aval de l'actionneur (1) pour l'actionnement d'une direction à superposition, avec laquelle un angle de braquage généré par l'actionnement de la jante de volant (62) peut être superposé par un angle de superposition pouvant être généré par la direction à superposition de sorte qu'un mouvement de rotation respectif d'un arbre de direction (7) relié au volant (6) se compose d'un angle de braquage pouvant être généré par l'actionnement de la jante de volant (62) et d'un angle de superposition pouvant être généré par l'actionnement de la direction à superposition, la direction à superposition présentant des composants (1, 12, 100, 102, 104) qui servent à la génération de l'angle de superposition,
**caractérisé en ce**
**qu'**un dispositif d'arrêt (2, 3, 4 ; 8) est prévu sur le volant (6), avec lequel l'entraînement à superposition (1, 100) peut être arrêté par l'action à complémentarité de formes et/ou à force, le dispositif d'arrêt (2, 3, 4 ;8) étant disposé sur l'entraînement à superposition (1, 100), un mécanisme d'interruption (2, 51, 53 ; 9) étant prévu, avec lequel avant ou lors de l'activation du dispositif d'arrêt (2, 3, 4 ; 8), l'alimentation en énergie, notamment l'alimentation en électricité de l'entraînement à superposition (1, 100) est interrompue de sorte que le dispositif d'arrêt (2, 3, 4 ; 8) arrête l'entraînement à superposition (1, 100) et le mécanisme d'interruption (9) présentant des moyens de commutation électriques ou électroniques pour l'interruption de l'alimentation en énergie de l'entraînement à superposition (1, 100).

2. Volant selon la revendication 1, **caractérisé en ce que** le dispositif d'arrêt (2, 3, 4 ; 8) comporte au moins un élément de retenue (2, 82) qui agit dans une position de retenue à complémentarité de formes et/ou à force sur un composant (12, 102) de l'entraînement à superposition (1, 100) afin de l'arrêter.

3. Volant selon la revendication 2, **caractérisé en ce qu'**un dispositif de génération de mouvement (3, 4 ; 80) est prévu, à l'aide duquel l'élément de retenue (2, 82) peut être déplacé alternativement entre la position de retenue et une position de libération, dans laquelle l'élément de retenue libère l'entraînement à superposition (1, 100) pour la génération d'un angle de superposition.

4. Volant selon l'une quelconque des revendications précédentes, **caractérisé en ce que** le dispositif d'arrêt (2, 3, 4 ; 8) peut être amené en engagement pour l'arrêt de l'entraînement à superposition (1, 100) avec une section d'arrêt (12a, 84) d'un composant (12, 102) transmettant le couple de l'entraînement à superposition (1, 100), le composant (12) transmettant le couple de l'entraînement à superposition (1, 100) étant formé par un arbre d'entraînement (12) de l'actionneur (1) ou un élément (102) relié à celui-ci.

5. Volant selon l'une quelconque des revendications précédentes, **caractérisé en ce qu'**un frein à court-circuit (22b, 52b, 53b) est prévu, avec lequel avant ou lors de l'activation du dispositif d'arrêt (2, 3, 4 ; 8) de sorte que celui-ci arrête l'entraînement à superposition (1, 100), un actionneur électrique (1) de l'entraînement à superposition (1, 100) est freiné par génération d'un court-circuit.

6. Volant selon la revendication 3 ou 4, dans la mesure où elle se réfère à la revendication 3, **caractérisé en ce que** l'élément de retenue (2, 82) se trouve dans l'état désactivé du dispositif d'arrêt (2, 3, 4 ; 8) dans sa position de libération et dans l'état activé du dispositif d'arrêt (2, 3, 4 ; 8) dans sa position de retenue, un dispositif de génération de mouvement (3, 4 ; 80, 82) avec lequel le dispositif d'arrêt (2, 3, 4 ; 8) peut être amené dans son état activé, dans lequel il arrête l'entraînement à superposition (1, 100), ainsi que dans son état désactivé, comporte un actionneur (3 ; 80) et un élément de retenue (2, 82) actionnable par celui-ci.

7. Volant selon la revendication 6, **caractérisé en ce que** le dispositif d'arrêt (2, 3, 4 ; 8) peut être amené dans son état désactivé par l'alimentation en électricité de l'actionneur (3 ; 80), dans lequel l'actionneur (3 ; 80) agit sur l'élément de retenue (2 ; 82) de telle manière que l'élément de retenue (2 ; 82) occupe sa position de libération et **en ce que** le dispositif d'arrêt (2, 3, 4 ; 8) peut être amené dans son état activé par interruption de l'alimentation en électricité de l'actionneur (3 ; 80), dans lequel l'élément de retenue (2 ; 82) occupe sa position de retenue.

8. Volant selon la revendication 2 ou l'une quelconque des revendications 2 à 6, dans la mesure où elle se réfère à la revendication 2, **caractérisé en ce qu'**au moins un élément de fixation (25, 82a) est prévu sur l'élément de retenue (2, 82) pour l'action sur un composant (12, 102) de l'entraînement à superposition (1, 100) afin de l'arrêter, l'élément de fixation (25, 82a) étant réalisé et prévu pour l'action par serrage et/ou par complémentarité de formes sur le composant (12, 102) de l'entraînement à superposition (1, 100).

9. Volant selon la revendication 2 ou l'une quelconque des revendications 3 à 8, dans la mesure où elle se réfère à la revendication 2, **caractérisé en ce que** l'élément de retenue (2, 82) est logé de manière coulissante ou pivotante afin de pouvoir le déplacer entre une position de libération et une position de retenue.

10. Volant selon la revendication 2 ou l'une quelconque des revendications 2 à 9, dans la mesure où elle se réfère à la revendication 2, **caractérisé en ce que** l'élément de retenue (82) est réalisé comme un boulon de verrouillage pouvant être amené en engagement avec un disque de verrouillage (84).

11. Volant selon l'une quelconque des revendications précédentes, **caractérisé en ce que** l'entraînement à superposition (100) est agencé derrière le moyeu de volant (60).

12. Volant selon l'une quelconque des revendications précédentes, **caractérisé en ce qu'**une unité de commande (9) disposée sur le volant (6) est agencée pour la commande de l'entraînement à superposition (1, 100) derrière le moyeu de volant (60).

13. Volant selon l'une quelconque des revendications précédentes, **caractérisé en ce que** l'entraînement à superposition (1, 100) présente un axe d'entraînement (H) qui est incliné en biais par rapport à l'arbre de direction (7).

14. Système de direction pour un véhicule automobile, avec un arbre de direction et avec un entraînement à superposition pour l'actionnement d'une direction à superposition, à l'aide de laquelle un angle de braquage généré par actionnement manuel du système de direction par un volant peut être superposé par un angle de superposition pouvant être généré par la direction à superposition de sorte qu'un mouvement de rotation respectif de l'arbre de direction se compose d'un angle de braquage pouvant être généré par actionnement manuel et d'un angle de superposition pouvant être généré par la direction à superposition,
**caractérisé en ce que**
la direction à superposition présente des composants (1, 12, 100, 102, 104) qui servent à la génération de l'angle de superposition, et un dispositif d'arrêt (2, 3, 4, 8) est prévu, avec lequel l'entraînement à superposition (1, 100) peut être arrêté par action à complémentarité de formes et/ou à force, et un frein à court-circuit (22b, 52b ; 53b) est en outre prévu, avec lequel, avant ou lors de l'activation du dispositif d'arrêt (2, 3, 4), de sorte que celui-ci arrête l'entraînement à superposition (1, 100), un actionneur (1) électrique de l'entraînement à superposition (1, 100) est freiné par génération d'un court-circuit.

15. Système de direction selon la revendication 14 avec un volant selon l'une quelconque des revendications 1 à 13.
